# EUROPÄISCHE PATENTANMELDUNG

(11) **EP 0 884 887 A2**
(43) Veröffentlichungstag der Anmeldung: **16.12.1998**
(21) Anmeldenummer: 98108323.1
(22) Anmeldetag: 07.05.1998
(51) Int. Cl.: H04M 11/02, H04M 3/42

(54) **Personenruf-Anlage**

(30) Priorität: 11.06.1997 DE 19724636
(71) Anmelder: ROBERT BOSCH GMBH, 70442 Stuttgart (DE)
(72) Erfinder: Boy, Dierk, 30173 Hannover (DE); Drake, Jochen, 38304 Wolfenbuettel (DE); Laue, Frank, 38321 Denkte (DE)

(57) **Zusammenfassung**

Bei einer Personenruf-Anlage für einen räumlich begrenzten Bereich, mit mindestens einem Bedien-/Eingabegerät (2, 3, 4), mindestens einer Rufzentrale (1), mindestens einer abgesetzt von der Rufzentrale betriebenen Basisstation (7 bis 9), mindestens einem der Basisstation (7 bis 9) zugeordneten Mobilgerät und mehreren in dem räumlich begrenzten Bereich angeordneten Lokalisierungssendern, wobei der Sendebereich jedes Lokalisierungssenders einen Teilbereich des räumlich begrenzten Bereichs abdeckt und das Mobilgerät mit Mitteln zum Empfangen und Übertragen der von den Lokalisierungssendern ausgesendeten Bereichskennungen ausgestattet ist, wird zur Sicherstellung einer eindeutigen Zuordnung zwischen der von dem Mobilgerät empfangenen Bereichskennung und dem aktuellen Aufenthaltsort des Mobilgeräts vorgeschlagen, den Lokalisierungssendern jeweils Mittel zum Detektieren einer sich in dem jeweils zugeordneten Teilbereich bewegenden Person zuzuordnen.

## Beschreibung

### Stand der Technik

Die Erfindung geht aus von einer Personenruf-Anlage nach dem Oberbegriff des Patentanspruchs 1.

Personenruf-Anlagen der in Rede stehenden Art werden unabhängig vom öffentlichen Telefonnetz betrieben und dienen dazu, Personen in einem begrenzten Bereich, wie z.B. auf einem Betriebsgelände, in einem Gebäude oder auf einer Baustelle, jederzeit und überall zu erreichen. Bspw. aus Sicherheitsgründen kann im Rahmen einer Personenruf-Anlage auch eine Lokalisierungsfunktion vorgesehen sein, mit deren Hilfe der aktuelle Aufenthaltsort einer Person im Bereich der Personenruf-Anlage festgestellt werden kann.

Eine Personenruf-Anlage umfaßt dazu zumindest ein Bedien-/Eingabegerät, mit dem zu übertragende Nachrichten zusammen mit der entsprechenden Rufempfängeradresse als Rufauftrag eingegeben, gespeichert und ausgelöst werden können. Das Bedien-/Eingabegerät kann bspw. als systemspezifische Bedienkonsole mit Tastatur und Anzeige realisiert sein. Als Bedien-/Eingabegerät können aber auch ein PC oder eine Telefon-Nebenstellenanlage genutzt werden, sofern sie über eine entsprechende Schnittstelie verfügen.

Eine Personenruf-Anlage der in Rede stehenden Art umfaßt ferner eine Rufzentrale mit Schnittstellen für abgesetzt betriebene Geräte. Die Rufzentrale kontrolliert das gesamte Rufnetz und den Rufbetrieb mit der Lokalisierungsfunktion. Sie formatiert die Rufaufträge, verwaltet eine Teilnehmer-Datenbank sowie die Bereichskennungen für die einzelnen Sektoren und Teilbereiche des von der Personenruf-Anlage abgedeckten Bereichs und steuert die Kommunikation zwischen dem Bedien-/Eingabegerät und den Mobilgeräten, die von den Benutzern der Personenruf-Anlage mitgeführt werden.

In jedem Falle umfaßt eine Personenruf-Anlage dann noch mindestens eine Basisstation als abgesetzt von der Rufzentrale betriebenes Gerät. Die Basisstation enthält einen Funksender, mit dem das leitungsgebundene Rufsignal in ein Funksignal umgesetzt wird, das dann von den Mobilgeräten empfangen werden kann. Außerdem umfaßt die Basisstation noch einen Funkempfänger, mit dem Funksignale der Mobilgeräte in das Basisband umgewandelt werden, so daß sie an die Rufzentrale übertragen werden können.

Zur Bestimmung des aktuellen Aufenthaltsorts einer mit einem Mobilgerät ausgestatteten Person wird der von der Personenruf-Anlage abgedeckte räumlich begrenzte Bereich in Sektoren unterteilt, deren Bereichskennungen in der Rufzentrale abgespeichert werden. In diesen Sektoren bzw. an deren Zugängen werden Lokalisierungssender angeordnet, deren Sendebereiche jeweils einen in geeigneter Weise räumlich begrenzten Teilbereich abdecken. Die Lokalisierungssender senden eine ihrem Standort entsprechende Bereichskennung aus, die von den Mobilgeräten nur in dem jeweiligen Teilbereich empfangen werden kann. Die aktuell empfangene Bereichskennung wird über einen im Mobilgerät integrierten Sender und eine ortsfeste Basisstation automatisch an die Rufzentrale übermittelt.

Die Lokalisierung einer mit einem Mobilgerät ausgestatteten Person erweist sich bei bekannten Personenruf-Anlagen häufig als problematisch, da aufgrund von Überlappungen und Überreichweiten der Sendebereiche dar Lokalisierungssender eine eindeutige Zuordnung zwischen der empfangenen Bereichskennung und dem tatsächlichen Aufenthaltsort der Person nicht möglich ist. Eine genau abgegrenzte Ausleuchtung eines definierten Teilbereichs ist auch durch Einstellung der abgestrahlten Sendeleistung nicht sicher zu erreichen, da bspw. Funkwellen auch durch Wände und Decken dringen.

### Vorteile der Erfindung

Zur Sicherstellung einer eindeutigen Zuordnung zwischen der von einem Mobilgerät empfangenen Bereichskennung und dem momentanen Aufenthaltsort des Mobilgeräts bzw. einer mit dem Mobilgerät ausgestatteten Person wird erfindungsgemäß vorgeschlagen, den Lokalisierungssendern der Personenruf-Anlage jeweils Mittel zum Detektieren einer sich in dem jeweils zugeordneten Teilbereich bewegenden Person zuzuordnen. Es ist nämlich erkannt worden, daß die Fehlerhäufigkeit bei der Feststellung des Aufenthaltsorts erheblich reduziert werden kann, wenn mit Hilfe von zwei unabhängig voneinander arbeitenden Systemen Informationen über den Aufenthaltsort gewonnen werden - nämlich von den den einzelnen Teilbereichen zugeordneten Lokalisierungssendern und den zugeordneten Detektionsmitteln - und diese Informationen dann kombiniert werden.

In den nachgeordneten Patentansprüchen sind vorteilhafte Ausgestaltungen und Weiterbildungen der im Patentanspruch 1 angegebenen Personenruf-Anlage aufgeführt.

So erweist es sich als vorteilhaft, wenn nicht nur die Bewegung einer Person in dem einem Lokalisierungssender zugeordneten Teilbereich erfaßt werden kann, sondern auch die Bewegungsrichtung dieser Person. Dadurch kann bspw. festgestellt werden, ob sich die Person dem Teilbereich nähert, oder ob sie im Begriff ist, den Teilbereich zu verlassen, und wenn ja, welche Richtung sie einschlägt.

In einer besonders vorteilhaften Ausführungsform einer erfindungsgemäßen Personenruf-Anlage dient das Detektieren einer Person in einem Teilbereich zum automatischen Aktivieren des zugeordneten Lokalisierungssenders. Die Lokalisierungssender müssen hier also nicht im Dauerbetrieb arbeiten; vielmehr wird das Aussenden der Bereichskennung mit der Detektion einer Bewegung in dem dem Lokalisierungssender zugeordneten Teilbereich korreliert. Die Detektionsmittel aktivieren den Lokalisierungssensor nur kurzzeitig, wodurch die Wahrscheinlichkeit verringert wird, daß mehrere Lokalisierungssender gleichzeitig senden und in Folge fehlerhafte Bereichskennungen von den Mobilgeräten empfangen und an die Rufzentrale übertragen werden.

Als Mittel zum Detektieren einer Bewegung innerhalb eines Teilbereichs kommen Türkontakte oder Lichtschranken in Frage. Bei geeigneter Anzahl und Anordnung von Türkontakten oder Lichtschranken läßt sich nicht nur eine Durchgangskontrolle realisieren, sondern auch - über die Abfolge der Sensorsignale - die Bewegungsrichtung einer Person erfassen. Alternativ können auch passive Infrarotdetektoren (PID) als Bewegungsmelder eingesetzt werden. Passive Infrarotdetektoren stehen sowohl für eine kreisförmige als auch für eine gerichtete Ausleuchtung zur Verfügung. So kann bspw. mit Hilfe von vor und hinter einer Tür montierten passiven Infrarotdetektoren und gerichteter Ausstrahlung von entsprechend zugeordneten Codierungen (n+1, n-1) die Bewegungsrichtung einer Person festgestellt werden. Dies ist auch mit einem Mikrowellen-Dopplermodul realisierbar, aus dessen Ausgangssignalen eine Richtungsinformation gewonnen werden kann. Ein geeignetes Mikrowellen-Dopplermodul könnte eine Reichweite von 8 m, eine Frequenz von 2,45 Ghz (ISM-Band) und eine Dopplerfrequenz von ca. 23 Hz für 5 km/h aufweisen.

Im Hinblick auf eine einfache Auswertung der an die Rufzentrale übertragenen Bereichskennungen ist es von Vorteil, wenn das Bedien-/Eingabegerät der erfindungsgemäßen Personenruf-Anlage mit Mitteln zur grafischen Darstellung des von der Personenruf-Anlage abgedeckten räumlich begrenzten Bereichs mit den einzelnen Sektoren und Teilbereichen und der aktuellen Position der Mobilgeräte ausgestattet ist. Auf diese Weise läßt sich einfach der Weg einer mit einem Mobilgerät ausgestatteten Person verfolgen und deren aktueller Aufenthaltsort bestimmen.

Des weiteren könnte die erfindungsgemäße Personenruf-Anlage in einer vorteilhaften Ausgestaltung mindestens ein Ablage-/Ladegerät für die Mobilgeräte umfassen, das mit Mitteln zum Detektieren der Anwesenheit der einzelnen Mobilgeräte ausgestattet ist. In diesem Falle würde ein Ablage-/Ladegerät nicht nur zur Lagerung und zum Aufladen der Mobilgeräte dienen, sondern könnte auch ein Anwesenheits-/Abwesenheitssignal an die Rufzentrale absetzen, das angibt, ob ein Mobilgerät entnommen worden ist. Dadurch könnte auf einfache Weise eine Ortungsroutine zum Lokalisieren eines Mobilgeräts aktiviert bzw. deaktiviert werden.

Üblicherweise werden die Bereichskennungen als Funksignale ausgesendet. Da die Lokalisierungssender häufig in Zwischendecken mehrstöckiger Gebäude angeordnet werden, ist hier eine Überlagerung der Sendebereiche von entsprechend angeordneten Lokalisierungssendern nicht zu vermeiden, was die Fehlerhäufigkeit bei der Aufenthaltsbestimmung deutlich erhöht. Es wird daher vorgeschlagen, in einer Variante der erfindungsgemäßen Personenruf-Anlage die Lokalisierungssender als Ultraschallsender zu realisieren, da Ultraschallsignale an Wänden reflektiert werden und diese nicht durchdringen.

Werden die Bereichskenungen in Form von Funksignalen übertragen, so ist in der Regel für die Übertragung zwischen den Lokalisierungssendern und den Mobilgeräten ein eigener Übertragungskanal erforderlich, um den Empfang der Rufsignale von der Rufzentrale bzw. den Basisstationen nicht zu beeinträchtigen. In einer vorteilhaften Variante der erfindungsgemäßen Personenruf-Anlage wird im Gegensatz dazu für die Übertragung der Rufsignale von der Rufzentrale an die Mobilgeräte und für die Übertragung der Bereichskennungen von den Lokalisierungssendern an die Mobilgeräte derselbe Rufkanal verwendet. Dazu könnten die Basisstationen der Personenruf-Anlage mit Mitteln zur Begrenzung der Bandbreite des Rufsignals versehen sein. Außerdem könnten noch Mittel zum Versetzen des Frequenzbereichs des Bereichskennungssignals und ggf. des Frequenzbereichs des Rufsignals vorgesehen sein. Da die Kanäle für die Übertragung der Rufsignale an die Mobilgeräte in der Regel eine Bandbreite von 25 kHz aufweisen, können sie durch Beschränkung der Bandbreite der Rufsignale und Hub auch zur Übertragung der Bereichskennungen genutzt werden. Die Entkopplung der HF-Spektren von Rufsignal und Bereichskennungssignal kann gewährleistet werden, wenn das Bereichskennungssignal in der Nähe der Kanalgrenze, d.h. um ca. 8 kHz von der Bandmitten-Frequenz versetzt mit niedriger Datenrate und Leistung ausgesendet wird. Bei Verwendung eines gemeinsamen Übertragungskanals für die Rufsignale und die Bereichskennungen können die im Mobilgerät für den Empfang der Rufsignale vorhandenen Baugruppen, wie Antenne, Vorselektion, Vorstufe und Mischer auch für den Empfang der Bereichskennungen verwendet werden. Außerdem lassen sich dann die Lokalisierungssender auf Quittungssender-Baugruppen aufbauen, welche Bestandteil von Personenruf-Anlagen sind. Ein weiterer Vorteil besteht darin, daß die Leistungsaufnahme der Lokalisierungssender sehr gering gehalten werden kann, so daß die Lokalisierungssender auch in explosionsgeschützten Bereichen zum Einsatz kommen können und ggf. mit Batterie betrieben werden können.

### Zeichnung

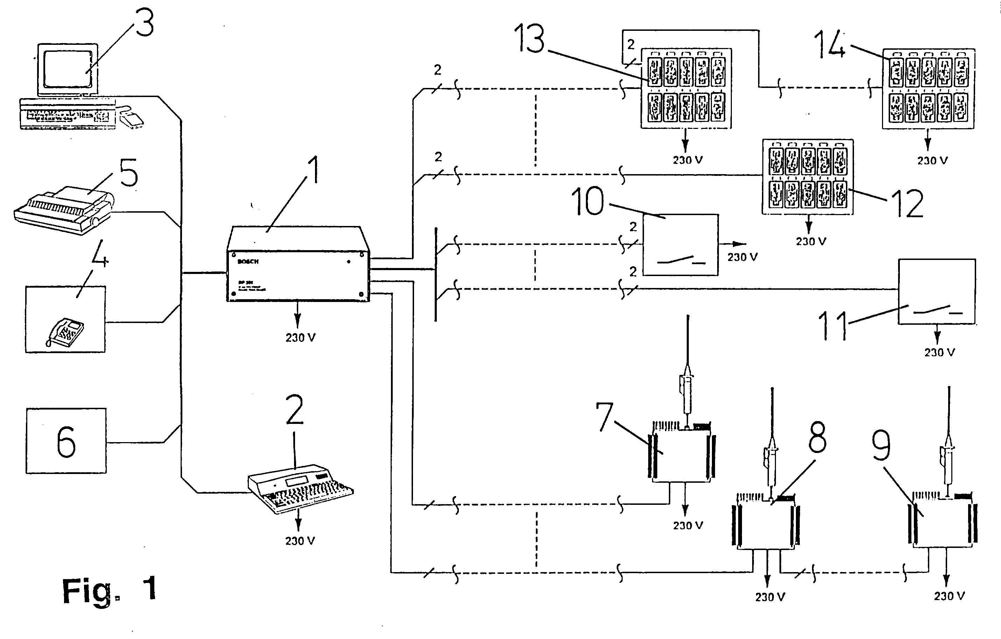

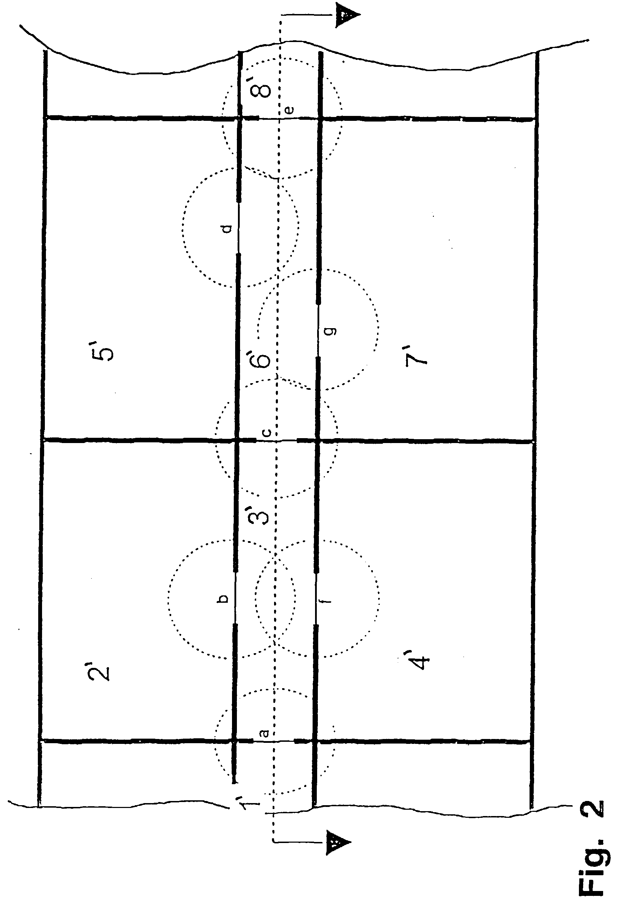

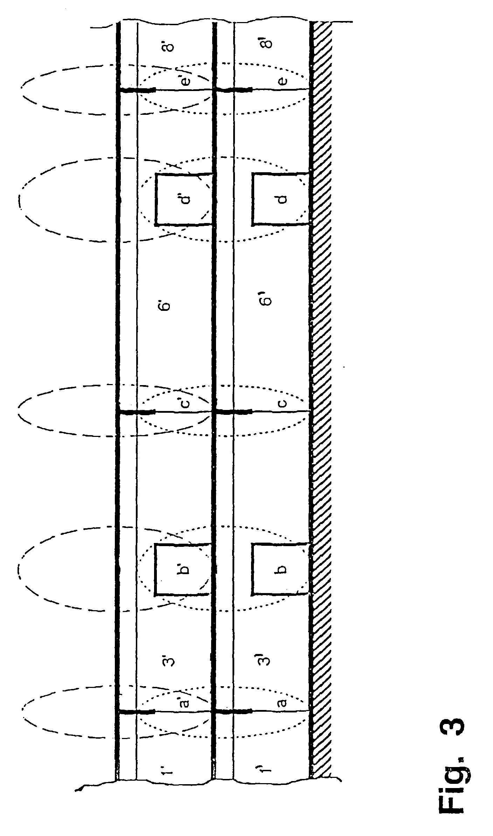

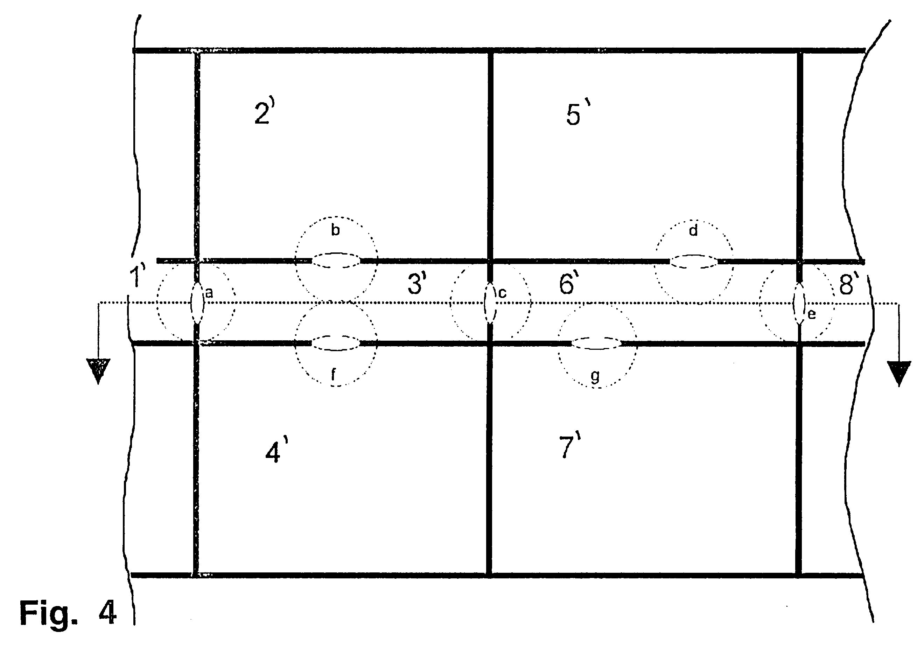

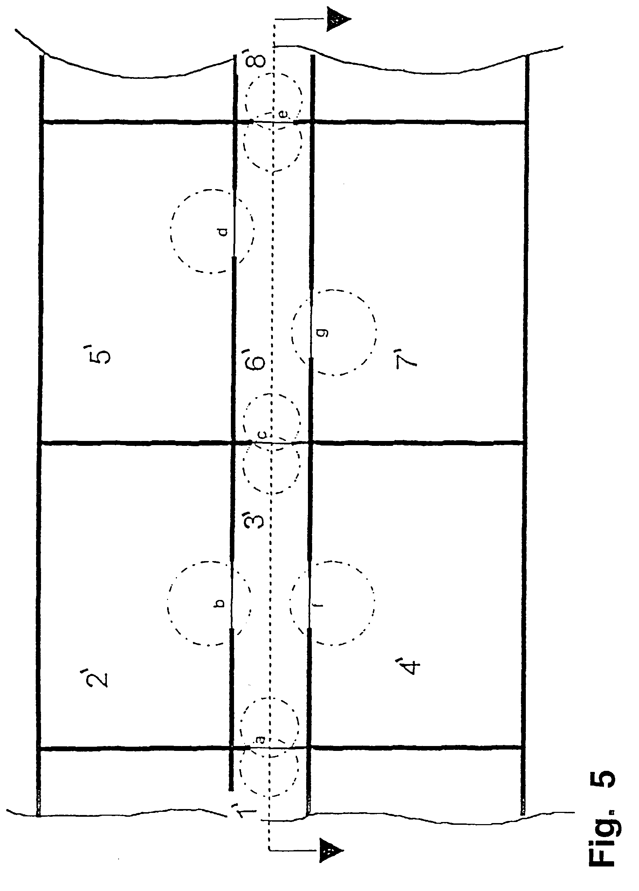

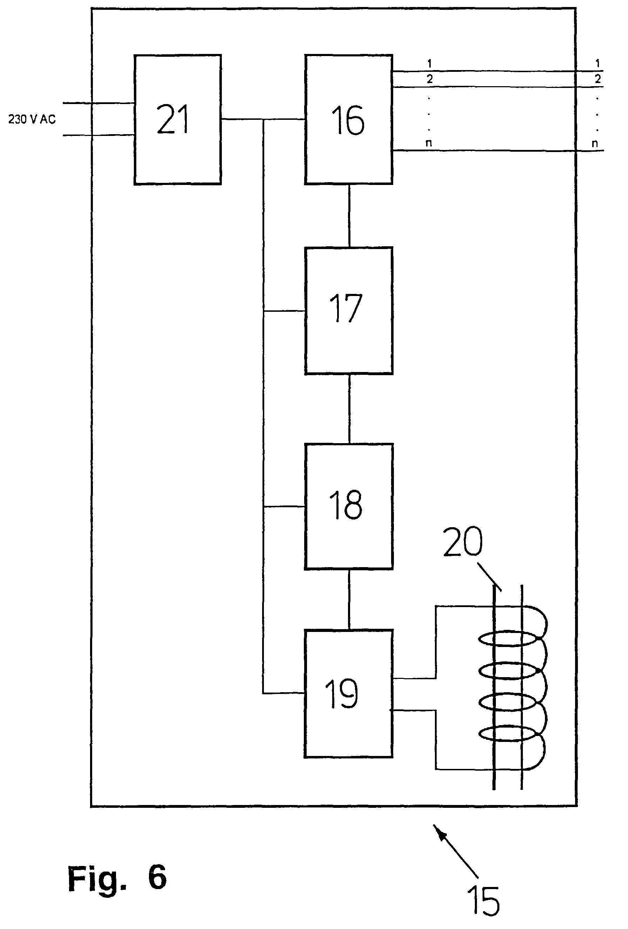

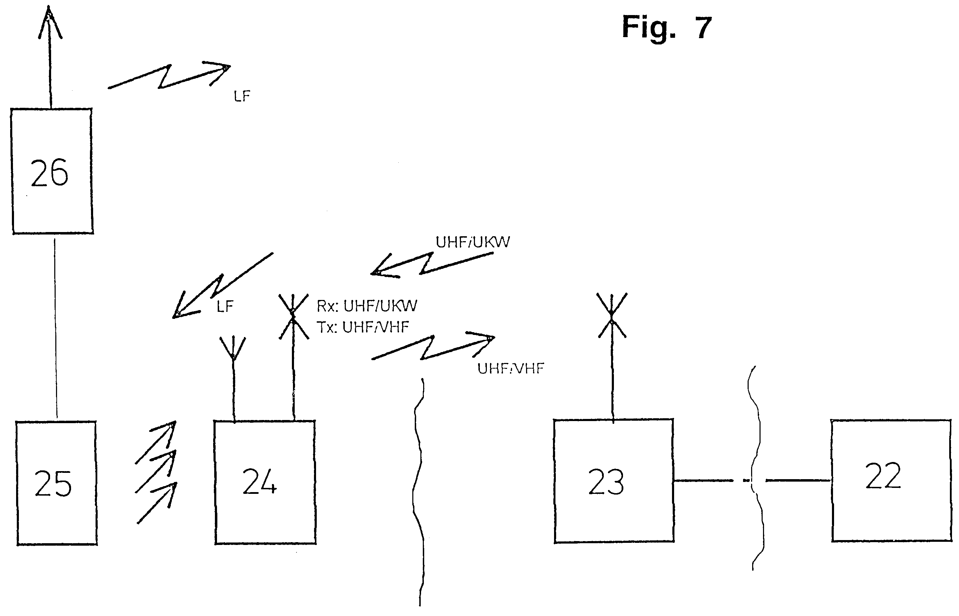

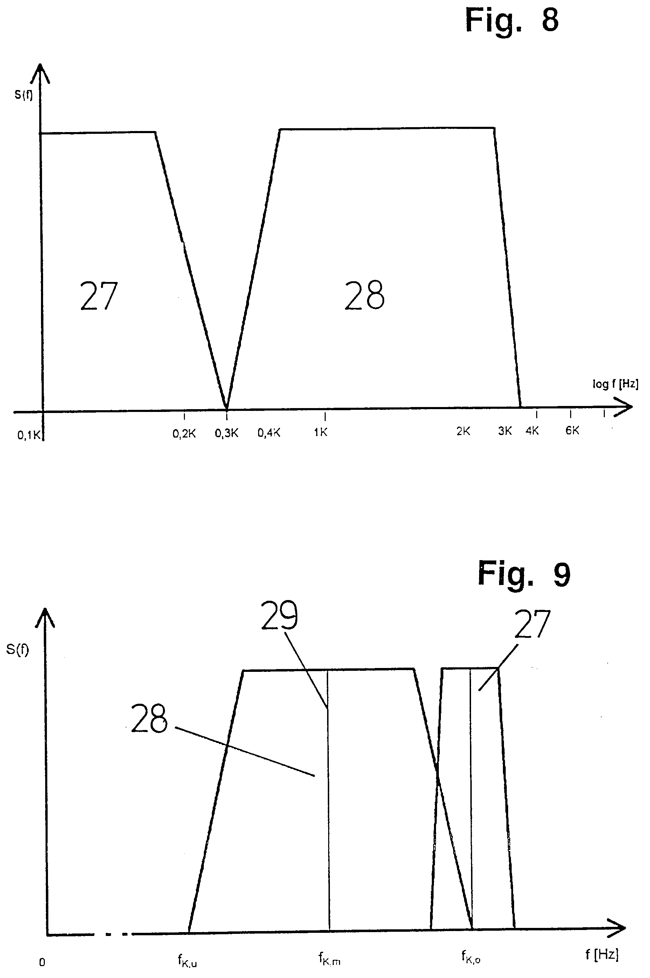

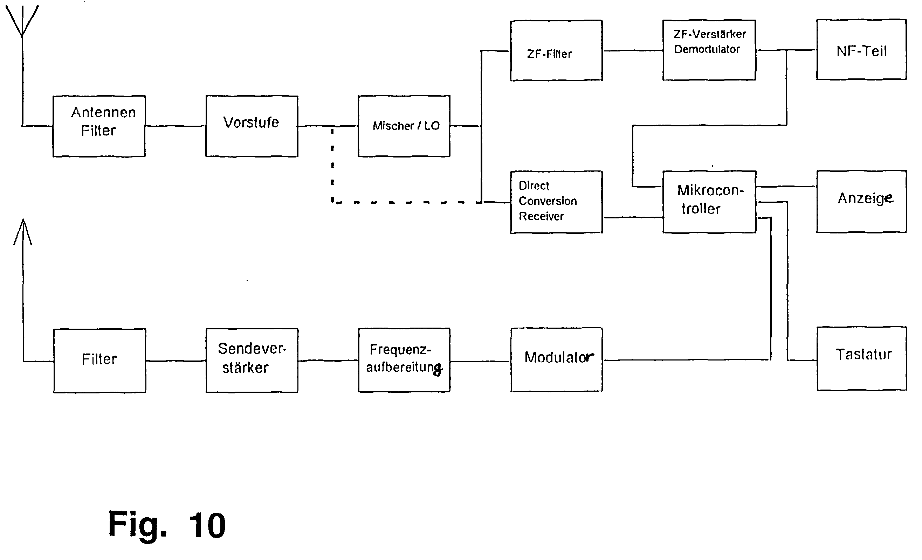

In der Zeichnung sind verschiedene Aspekte von erfindungsgemäßen Personenruf-Anlagen dargestellt und in der nachfolgenden Beschreibung näher erläutert. Figur 1 zeigt die einzelnen Komponenten einer Personenruf-Anlage und veranschaulicht deren Zusammenwirken. Figur 2 zeigt den Grundriß eines mit einer Personenruf-Anlage ausgestatteten Gebäudeteils und insbesondere die Sendebereiche der Lokalisierungssender dieser Personenruf-Anlage. Figur 3 zeigt den Querschnitt eines mit einer Personenruf-Anlage ausgestatteten Gebäudeteils und insbesondere die Sendebereiche der Lokalisierungssender dieser Personenruf-Anlage. Die Figuren 4 und 5 zeigen die in Figur 2 dargestellte Situation, wobei hier allerdings zusätzliche Mittel zum Detektieren einer sich in den Sendebereichen der Lokalisierungssender befindlichen Person vorgesehen sind. Figur 6 zeigt ein Blockschaltbild eines Induktiv-Lokalisierungssenders. Figur 7 gibt das Signalisierungsschema einer Personenruf-Anlage wieder, bei der für die Übertragung der Bereichskennungssignale und der Rufsignale unterschiedliche Rufkanäle verwendet werden. Die Figuren 8 und 9 veranschaulichen, wie das Basisband eines Übertragungskanals zur Übertragung sowohl des Rufsignals als auch des Bereichskennungssignals genutzt werden kann. Figur 10 zeigt das Blockschaltbild eines Mobilgeräts für den Empfang von in einem gemeinsamen Kanal übertragenen Rufsignalen und Bereichskennungssignalen.

### Beschreibung der Ausführungsbeispiele

Die in Figur 1 dargestellte Personenruf-Anlage umfaßt eine Rufzentrale 1 mit Schnittstellen für die nachfolgend näher erläuterten abgesetzt betriebenen Geräte, die verteilt in einem räumlich begrenzten Bereich, nämlich bspw. einem Gebäude oder auf einem Gelände, angeordnet sind. Diese Geräte bilden die stationäre Infrastruktur einer um Lokalisierungsfunktionen erweiterten Personenruf-Anlage. Die Rufzentrale 1 kontrolliert das gesamte Rufnetz und den Rufbetrieb der Personenruf-Anlage sowie die Lokalisierungsfunktion.

An die Rufzentrale 1 sind mehrere Bedien-/Eingabegeräte angeschlossen, über die die Rufempfängeradressen und Nachrichten als Rufaufträge eingegeben werden können, gespeichert und ausgelöst werden. Neben einem systemspezifischen Bediengerät 2 dienen hier ein PC 3 und eine Nebenstellenanlage 4 als Bedien-/Eingabegeräte. Mit Hilfe des PC 3 ist eine grafische Darstellung des räumlich begrenzten Bereichs, bspw. des Gebäude-/Gelände-Grundrisses, zur Wegverfolgung und Ortsbestimmung einer mit einem Mobilgerät ausgestatteten Person möglich. Außerdem verfügt die Rufzentrale 1 noch über Anschlüsse für einen Drucker 5 und externe Rufdienste 6.

Die dargestellte Personenruf-Anlage umfaßt Basisstationen 7 bis 9, die zur Signalübertragung jeweils - direkt oder indirekt - über eine Leitung mit der Rufzentrale 1 verbunden sind. Die Basisstation 9 ist lediglich indirekt über die Basisstation 8 mit der Rufzentrale 1 verbunden. Die Basisstation 8 dient hier also zusätzlich als Relaisstation zwischen der Rufzentrale 1 und der Basisstation 9. Die Basisstationen 7 bis 9 enthalten jeweils einen Funksender zur Umsetzung des leitungsgebundenen Rufsignals der Rufzentrale in ein Funksignal. Außerdem umfassen die Basisstationen 7 bis 9 jeweils einen Empfänger für von den hier nicht dargestellten Mobilgeräten der Personenruf-Anlage gesendete Signale. Dabei kann es sich um Antwortsignale auf die Rufsignale der Rufzentrale handeln oder um Bereichskennungssignale, die die Mobilgeräte von hier nicht dargestellten im Bereich der Personenruf-Anlage angeordneten Lokalisierungssendern empfangen haben.

Die Lokalisierungssender sind jeweils einem Teilbereich des von der Personenruf-Anlage abgedeckten räumlich begrenzten Bereichs zugeordnet und senden eine Bereichskennung bzw. ein Bereichskennungssignal aus, das möglichst nur in unmittelbarer Nähe der Lokalisierungssender von den Mobilgeräten empfangen werden kann.

Des weiteren umfaßt die dargestellte Personenruf-Anlage von der Rufzentrale 1 abgesetzt betriebene Melder 10 und 11, die mit Hilfe einer aufgabenspezifischen Sensorik bestimmte Ereignisse, wie z.B. Feuer, detektieren können und über eine Leitungsverbindung der Rufzentrale 1 mitteilen können. Diese wiederum kann dann durch die Signale der Melder 10 oder 11 aktiviert gezielte Alarmrufe auslösen.

Schließlich umfaßt die dargestellte Personenruf-Anlage noch Ablagegeräte 12 bis 14, die zur Lagerung und Aufladung von Mobilgeräten dienen. Außerdem generieren diese Ablage-/Ladegeräte 12 bis 14 auch sog. Abwesenheits-/Anwesenheitssignale, die Anzeigen, ob ein Mobilgerät entnommen worden ist. Diese Abwesenheits-/Anwesenheitssignale werden über Leitungsverbindungen an die Rufzentrale 1 übermittelt. Das Ablage-/Ladegerät 14 ist hier nicht direkt mit der Rufzentrale 1 verbunden, sondern lediglich indirekt über das Ablage-/Ladegerät 13, so daß dieses als Relaisstation dient. Mit Hilfe der Abwesenheits-/Anwesenheitssignale kann eine Ortungsroutine für ein lokalisierungsfähiges Mobilgerät aktiviert bzw. deaktiviert werden.

Personenruf-Anlagen mit Lokalisierungsfunktionen ermöglichen nicht nur eine schnelle Nachrichtenübermittlung in einem räumlich begrenzten Bereich, sondern auch die Bestimmung des Aufenthaltsorts von mit einem Mobilgerät ausgestatteten Personen. Derartige Personenruf-Anlagen finden daher insbesondere Anwendung bei der Personensicherung in gefährdeten Arbeitsbereichen. Zur Bestimmung des Aufenthaltsorts einer Person wird der von der Personenruf-Anlage räumlich begrenzte Bereich in Sektoren unterteilt, deren Bezeichnung in der Rufzentrale abgespeichert und ggf. mit Hilfe eines geeigneten Sichtgeräts grafisch abgebildet werden kann. Beispiele für derartige grafische Abbildungen sind in den Figuren 2 bis 5 dargestellt. Bei den Sektoren 1' bis 8' handelt es sich jeweils um Räume eines Gebäudes. An den Zugängen zu den einzelnen Sektoren 1' bis 8' sind Lokalisierungssender a bis g angeordnet, deren Sendebereiche jeweils gestrichelt dargestellt sind. Die Lokalisierungssender a bis g senden eine Bereichskennung aus, die von in ihrem Sendebereich befindlichen Mobilgeräten empfangen werden können und den aktuellen Aufenthaltsort eines Mobilgeräts wiedergeben. Die empfangene Bereichskennung wird über einen im Mobilgerät integrierten Sender und die ortsfesten Basisstationen automatisch an die Rufzentrale übermittelt.

Die Übermittlung der Bereichskennungen von den Lokalisierungssendern an die Mobilgeräte sollte folgenden Anforderungen gerecht werden:
1. Eindeutigkeit der Zuordnung zwischen empfangener Bereichskennung und tatsächlichem Aufenthaltsort des Mobilgeräts.
2. Verdeckte Trageweise des empfangenen Mobilgeräts.
3. Verdeckte Anordnung des Lokalisierungssenders und seiner Antenne.
4. Minimierung des Elektronikaufwandes im Mobilgerät.

Die Figuren 2 und 3 verdeutlichen, daß Probleme bei der eindeutigen Zuordnung zwischen der von einem Mobilgerät empfangenen Bereichskennung und dem tatsächlichen Aufenthaltsort des Mobilgeräts durch die Überlappung und durch Überreichweiten der Sendebereiche von verschiedenen Lokalisierungssendern entstehen können. Wird die Bereichskennung mit Hilfe von Funksignalen ausgestrahlt, so ist eine genau abgegrenzte Ausleuchtung eines definierten Bereichs auch durch Einstellung der abgestrahlten Leistung nicht sicher zu erreichen, da Funkwellen auch Wände durchdringen. Diese Mehrdeutigkeiten bei der Lokalisierung entstehen bspw. dann, wenn die Lokalisierungssender in den Zwischendecken mehrstöckiger Gebäude angeordnet sind. Diese Situation ist in Figur 3 dargestellt.

Erfindungsgemäß wird nun eine eindeutige Zuordnung zwischen den von einem Mobilgerät empfangenen Bereichskennungen und dem momentanen Aufenthaltsort des Mobilgeräts dadurch erreicht, daß den Lokalisierungssendern jeweils Mittel zugeordnet sind, mit denen die Bewegung einer Person in einem dem jeweiligen Lokalisierungssender zugeordneten Teilbereich detektiert werden kann. Dadurch lassen sich unabhängig von den Lokalisierungssendern zusätzliche Informationen über den Aufenthaltsort einer Person gewinnen, wodurch die Fehlerhäufigkeit bei der Aufenthaltsbestimmung reduziert werden kann.

In den in den Figuren 4 und 5 dargestellten Situationen sind Lokalisierungssender a bis g an Durchgängen bzw. Zu- und Ausgängen der Sektoren 1' bis 8' positioniert. In Figur 4 sind die Sendebereiche der Lokalisierungssender a bis g kreisförmig ausgebildet. Zusätzlich sind bei der in Figur 4 dargestellten Situation an den Zu- und Ausgängen der einzelnen Sektoren 1' bis 8' Lichtschranken bzw. Türkontakte vorgesehen, deren Erfaßungsbereiche durch Ellipsen angedeutet sind. Figur 5 ist in Zusammenhang mit Figur 2 zu sehen, wo die kreisförmigen Sendebereiche der an den Durchgängen und Zu- und Ausgängen der einzelnen Sektoren 1' bis 8' angeordneten Lokalisierungssender a bis g dargestellt sind. Figur 5 zeigt die Erfassungsbereiche von passiven Infrarotdetektoren, die den Lokalisierungssendern a bis g zugeordnet sind.

In den dargestellten Ausführungsbeispielen werden die Lokalisierungssender a bis g durch eine zusätzliche Sensorik in Form der Lichtschranken oder Türkontakte bzw. der passiven Infrarotdetektoren aktiviert, so daß sie nur kurzzeitig eine Bereichskennung aussenden, wodurch - aufgrund der Zeitwahrscheinlichkeit - eine Überlagerung der Bereichskennungssignale mehrerer Lokalisierungssender weitgehend vermieden wird.

Eine mit einem lokalisierbaren Mobilgerät ausgestattete Person wird durch einen der oben angegebenen Detektoren - Lichtschranke, Türkontakt oder passiver Infrarotdetektor - erfaßt. Dadurch ausgelöst sendet der zugeordnete Lokalisierungssender zeitbegrenzt ein sog. Telegramm aus, das durch Redundanz gesichert die Bereichskennung und ggf. eine Richtungsinformation über die Bewegung der Person enthält. Dieses Telegramm wird zweckmäßigerweise wiederholt. Das Mobilgerät der Person empfängt das Telegramm und speichert seinen Inhalt als Datenblock ab. Bei Vorliegen eines freien Mobilkanals (Quittungskanal) oder im Alarmfalle werden sowohl das letzte als auch eine geeignete Anzahl vorher empfangener Telegramme zusammen mit der Adresse des Mobilgeräts an die Rufzentrale gesendet. Aus der Abfolge dieser Telegramme bzw. Datenblöcke läßt sich der momentane Aufenthaltsort und der Weg dorthin bestimmen. Eine visuelle Darstellung des aktuellen Standortes kann, wie bereits erwähnt, auf einem geeigneten Sichtgerät erfolgen. Diese Ortungsinformationen können auch unmittelbar nach dem Empfang der Telegramme des Lokalisierungssenders mit der Uhrzeit protokolliert werden, bspw. zur Dokumentation eines vom Wachpersonal durchzuführenden Kontrollganges.

Figur 6 zeigt ein Blockschaltbild eines Induktiv-Lokalisierungssenders 15, der über eine Schnittstelle 16 verfügt, über die er mit den ihm zugeordneten Detektionsmitteln in Verbindung steht. Über eine Mikroprozessorsteuerung 17 kann der Lokalisierungssender 15 in Abhängigkeit von den Signalen der Detektionsmittel aktiviert und deaktiviert werden. Zum Aussenden der Bereichskennungssignale verfügt der dargestellte Lokalisierungssender 15 über ein Frequenzaufbereitungs-/Modulator-Modul 18, einen Sendeverstärker 19 und eine Antenne 20. Außerdem ist eine Stromversorgung 21 vorgesehen.

Figur 7 zeigt ein Signalisierungsschema einer erfindungsgemäßen Personenruf-Anlage. Die Übertragung der Rufsignale von einer Rufzentrale 22 an ein Mobilgerät 24 erfolgt hier über eine mit der Rufzentrale 22 leitungsverbundene Basisstation 23. Das Rufsignal wird dazu in der Basisstation 23 in ein UHF/UKW-Funksignal umgewandelt.

Über einen passiven Infrarotdetektor 25 wird ein Lokalisierungssender 26 zur Aussendung eines Bereichskennungssignals im LF-Bereich aktiviert. Dieses Bereichskennungssignal kann von dem Mobilgerät 24 empfangen werden, sofern es sich im Sendebereich des Lokalisierungssenders 26 befindet. Die Funkübertragung des Bereichskennungssignals und des Rufsignals an das Mobilgerät 24 erfolgt über verschiedene Übertragungskanäle, damit insbesondere das Rufsignal nicht durch das Bereichskennungssignal gestört wird.

Die Kanäle, die für die sog. Down-Link-Verbindung für den Anruf von der Rufzentrale an die Mobilgeräte zur Verfügung stehen, weisen üblicherweise eine Bandbreite von 25 kHz auf. Eine Übertragung des Rufsignals und des Bereichskennungssignals über einen gemeinsamen Kanal ist dann möglich, wenn die Sendesignal-Bandbreite in geeigneter Weise beschränkt und ggf. angehoben wird. Diese Situation ist in Figur 9 dargestellt. Mit 27 ist hier der spektrale Bereich für die Bereichskennung gekennzeichnet, während mit 28 das Rufsignalspektrum bezeichnet ist.

Zur Gewährleistung der Entkopplung der HF-Spektren von Ruf- und Bereichskennungssignal wird letzteres vorzugsweise in der Nähe der Kanalgrenze, d.h. um ca. 8 kHz von der Bandmitten-Frequenz versetzt mit niedriger Datenrate und Leistung ausgesendet. Dies ist in Figur 8 veranschaulich, wo die Kanalmitte mit 29 bezeichnet ist.

Figur 10 veranschaulicht, daß die weitere Signalverarbeitung von über einen gemeinsamen Kanal übertragenem Rufsignal und Bereichskennungssignal dann sowohl vor als auch hinter der Mischstufe erfolgen kann. Durch die getrennten Verarbeitungszüge ist der gleichzeitige Empfang von Sendesignal und Bereichskennungssignal bei gemeinsamer Nutzung einer Antenne, Vorselektion, Vor- und ggf. Mischstufe möglich. Aufgrund des begrenzten Sendebereichs der Lokalisierungssender beträgt der Sendepegel der Bereichskennungen im UHF-Band < 100 µW, so daß unzulässige Störungen des Rufsignals auch bei gemeinsamer Übertragung über einen Kanal nicht zu erwarten sind. Das Bereichskennungssignal wird vorzugsweise mit niedriger Datenrate in schmalbandiger FSK-Modulation übertragen, um vor oder ggf. nach Umsetzung auf die ZF-Ebene in einem Homodynempfänger (Direct Conversion Receiver) verarbeitet werden zu können.

## Patentansprüche

1. Personenruf-Anlage für einen räumlich begrenzten Bereich, mit mindestens einem Bedien-/Eingabegerät (2, 3, 4), mindestens einer Rufzentrale (1), mindestens einer abgesetzt von der Rufzentrale betriebenen Basisstation (7 bis 9), mindestens einem der Basisstation (7 bis 9) zugeordneten Mobilgerät und mehreren in dem räumlich begrenzten Bereich angeordneten Lokalisierungssendern, wobei der Sendebereich jedes Lokalisierungssenders einen Teilbereich des räumlich begrenzten Bereichs abdeckt und das Mobilgerät mit Mitteln zum Empfangen und Übertragen der von den Lokalisierungssendern ausgesendeten Bereichskennungen ausgestattet ist,
**dadurch gekennzeichnet**, daß den Lokalisierungssendern jeweils Mittel zum Detektieren einer sich in dem jeweils zugeordneten Teilbereich bewegenden Person zugeordnet sind.

2. Personenruf-Anlage nach Anspruch 1, dadurch gekennzeichnet, daß den Lokalisierungssendern jeweils Mittel zum Detektieren der Bewegungsrichtung der Person zugeordnet sind.

3. Personenruf-Anlage nach einem der Ansprüche 1 oder 2, dadurch gekennzeichnet, daß die Lokalisierungssender automatisch aktiviert und deaktiviert werden in Abhängigkeit davon, ob sich eine Person in dem jeweils zugeordneten Teilbereich bewegt hat und ggf. in Abhängigkeit von der Bewegungsrichtung dieser Person.

4. Personenruf-Anlage nach einem der Ansprüche 1 bis 3, dadurch gekennzeichnet, daß als Mittel zum Detektieren einer Bewegung und ggf. der Bewegungsrichtung Türkontakte und/oder Lichtschranken dienen.

5. Personenruf-Anlage nach einem der Ansprüche 1 bis 4, dadurch gekennzeichnet, daß als Mittel zum Detektieren einer Bewegung und ggf. der Bewegungsrichtung passive Infrarot-Detektoren dienen.

6. Personenruf-Anlage nach einem der Ansprüche 1 bis 5, dadurch gekennzeichnet, daß als Mittel zum Detektieren einer Bewegung und ggf. der Bewegungsrichtung Mikrowellen-Dopplermodule dienen.

7. Personenruf-Anlage nach einem der Ansprüche 1 bis 6, dadurch gekennzeichnet, daß das Bedien-/Eingabegerät (3) mit Mitteln zur graphischen Darstellung des räumlich begrenzten Bereichs mit den Teilbereichen und der aktuellen Position des Mobilgerätes ausgestattet ist.

8. Personenruf-Anlage nach einem der Ansprüche 1 bis 7, dadurch gekennzeichnet, daß als weiteres abgesetzt von der Rufzentrale betriebenes Gerät mindestens ein Ablage-/Ladegerät (12 bis 14) für das Mobilgerät vorgesehen ist und daß das Ablage-/Ladegerät (12 bis 14) mit Mitteln zum Detektieren der Anwesenheit des Mobilgeräts ausgestattet ist.

9. Personenruf-Anlage nach einem der Ansprüche 1 bis 8, dadurch gekennzeichnet, daß die Lokalisierungssender Ultraschallsender sind.

10. Personenruf-Anlage nach einem der Ansprüche 1 bis 9, dadurch gekennzeichnet, daß zur Übertragung der Rufsignale von der Rufzentrale bzw. der Basisstation an das Mobilgerät und zur Übertragung der Bereichskennungen von den Lokalisierungssendern an das Mobilgerät derselbe Übertragungskanal verwendet wird.

11. Personenruf-Anlage nach Anspruch 10, dadurch gekennzeichnet, daß Mittel zur Begrenzung der Bandbreite der Rufsignale vorgesehen sind.

12. Personenruf-Anlage nach einem der Ansprüche 10 bis 11, dadurch gekennzeichnet, daß Mittel zum Versetzen des Frequenzbereichs der Bereichskennungen und ggf. des Frequenzbereichs der Rufsignale vorgesehen sind.
